**Europäisches Patentamt**

**European Patent Office**

**Office européen des brevets**

(19)

(11) Veröffentlichungsnummer: **0 325 697 B1**

# EUROPÄISCHE PATENTSCHRIFT

(12)

(45) Veröffentlichungstag der Patentschrift:
19.06.91 Patentblatt 91/25

(51) Int. Cl.⁵: **F16L 9/18**, F16L 59/12

(21) Anmeldenummer: **88116346.3**

(22) Anmeldetag: **03.10.88**

(54) **Koaxialrohr.**

(30) Priorität: **27.01.88 DE 8800949 U**

(43) Veröffentlichungstag der Anmeldung:
**02.08.89 Patentblatt 89/31**

(45) Bekanntmachung des Hinweises auf die
Patenterteilung:
**19.06.91 Patentblatt 91/25**

(84) Benannte Vertragsstaaten:
**AT BE CH DE FR IT LI LU NL SE**

(56) Entgegenhaltungen:
**DE-A- 2 164 814**
**DE-A- 3 018 781**
**DE-C- 1 072 946**
**GB-A- 1 227 516**

(73) Patentinhaber: **REHAU AG + Co**
**Rheniumhaus**
**W-8673 Rehau (DE)**

(72) Erfinder: **Der Erfinder hat auf seine Nennung**
**verzichtet**

Anmerkung: Innerhalb von neun Monaten nach der Bekanntmachung des Hinweises auf die Erteilung
des europäischen Patents kann jedermann beim Europäischen Patentamt gegen das erteilte europäische Patent Einspruch einlegen. Der Einspruch ist schriftlich einzureichen und zu begründen. Er gilt
erst als eingelegt, wenn die Einspruchsgebühr entrichtet worden ist (Art. 99(1) Europäisches Patentübereinkommen).

EP 0 325 697 B1

Jouve, 18, rue Saint-Denis, 75001 PARIS

## Beschreibung

Die Erfindung betrifft ein Koaxialrohr mit einem definierten Abstand des Außenumfangs Innenrohr zum Innenumfang Außenrohr, wobei dieser Abstand durch im lichten Raum zwischen Innenrohr und Außenrohr angeordnete Abstandsbänder aus polymerem Werkstoff mit noppenartigen Erhöhungen geschaffen ist.

Aus der DE-A- 23 27 926 ist ein doppelwandiges Rohr bekannt, bei dem das Innenrohr und das Außenrohr durch Distanzmittel gegeneinander abgestimmt sind. Die Distanzmittel bestehen dabei aus einer auf das Innenrohr aufgezogenen Wendel. Die Wendel ist in gleichmäßiger Dicke gehalten und bestimmt somit den gleichmäßigen Abstand des Innenrohres vom Außenrohr.

Das doppelwandige Rohr nach diesem Stand der Technik hat den Nachteil, daß ein erheblicher Montageaufwand bei der Herstellung des Koaxialrohres erforderlich ist. Festzustellen ist in diesem Zusammenhang insbesondere, daß die Wendel beim Aufbringen auf das Innenrohr in ihren einzelnen Wendelsteigungen auf gleichem Abstand gehalten werden muß, um wiederum den gleichen Abstand des Innenrohres vom Außenrohr zu gewährleisten. Dadurch ergeben sich Befestigungsprobleme, die wiederum eine aufwendige Montagetechnik erfordern.

Aus der DE-A-30 18 781 ist ein weiteres doppelwandiges Rohr bekannt, bei dem das Innenrohr und das Außenrohr durch ein Abstandsband mit noppenartigen Erhöhungen auf Abstand gehalten sind. Dieses Abstandsband wird wendelförmig auf eine Isolierung des Innenrohres aufgebracht. Zwischen den einzelnen Wendeln des Abstandsbandes ist ein annähernd seiner Breite entsprechender Zwischenraum gelassen.

Durch dieses Abstandsband mit noppenartigen Erhöhungen wird bei dem Rohrverbund nach dem Stand der Technik ein Ringhohlraum im Querschnitt geschaffen, der zur Erhöhung des thermischen Widerstandes evakuiert werden kann, Auch bei dieser Anordnung ergibt sich ein erhöhter Montageaufwand.

Hier setzt die Erfindung ein, die es sich zur Aufgabe gestellt hat, eine einfache Anordnung von Abstandhaltern auf Innenrohren zur Herstellung eines doppelwandigen Rohres und eine einfache Montage des Rohrverbundes zu ermöglichen. Erfindungsgemäß wird hierzu vorgeschlagen, daß das einzelne Abstandsband aus polymerem Werkstoff radial oder axial verlaufend auf der äußeren Umfangsfläche des Innenrohres festgelegt ist, und daß die noppenartigen irhöhungen einseitig und abschnittsweise versetzt zueinander in wenigstens zwei Reihen auf der Oberfläche des Abstandsbandes angeordnet sind.

Die erfindungsgemäßen Bänder aus polymerem Werkstoff können mit verhältnismäßig dünnem Querschnitt eingesetzt werden. Hierbei werden die noppenartigen Erhöhungen beispielsweise im Verfahren des Tiefziehens ausgebildet. Selbstverständlich können auch andere Bearbeitungsverfahren polymerer Werkstoffe zur Bildung dieser noppenartigen Erhöhungen in den Abstandsbändern eingesetzt werden. Die noppenartigen Erhöhungen, die nach der Erfindung einseitig und abschnittsweise versetzt in die Abstandsbänder aus polymerem Werkstoff eingebracht sind, sind über die Lange der Abstandsbänder in gleicher Höhe gestaltet. Diese Höhe definiert den Abstand des Innenrohres vom Außenrohr.

Zwischen zwei Reihen der noppenartigen Erhöhungen kann ein längs des Abstandsbandes verlaufender Freiraum ohne Erhöhungen verbleiben. In diesen Freiraum können beispielsweise Haltemittel wie Spanndrähte oder Spannbänder eingelegt werben, mit denen das Abstandsband am Innenrohr festgelegt sein kann.

Die Festlegung des Abstandsbandes kann auch mit den nach außen ragenden noppenartigen Erhöhungen durch Kleben auf der äußeren Umfangsfläche des Innenrohres erfolgen. Diese Klebeverbindung kann außerdem durch ein von außen in den Freiraum zwischen zwei Reihen der noppenartigen Erhöhungen eingelegtes mechanisches Spannelement – wie oben beschrieben – verstärkt werden.

Vorteilhaft können mehrere Abstandsbänder in definiertem Abstand auf der äußeren Umfangsfläche des Innenrohres festgelegt werden. Diese Festlegung kann entweder radial oder axial verlaufend auf der äußeren Umfangsfläche des Innenrohres erfolgen.

Der neuerungsgemäße Abstandhalter gewährleistet eine einfache und kostengünstige Montage des Rohrverbundes zwischen Innenrohr und Außenrohr. Zu diesem Zweck werden zunächst auf den äußeren Umfang des Innenrohres die abstandhaltenden Bänder mit den nach außen ragenden noppenartigen Erhöhungen aufgebracht. Dieses Aufbringen kann abschnittsweise radial derart erfolgen, daß die Bänder mit den nach außen ragenden noppenartigen Erhöhungen um den äußeren Umfang des Innenrohres herumgelegt werden. Dieser Vorgang kann sich nach im Einzelfall zu bestimmenden Abständen wiederholen, sodaß auf die gesamte Rohrlänge mehrere auf den Umfang verteilte radial angeordnete Bänder aufgelegt sind. Die Befestigung dieser Bänder kann einfach durch Kleben erfolgen, wobei die günstige Verklebbarkeit des aus polymerem Werkstoff gefertigten Abstandbandes mit einem ebenfalls aus polymerem Werkstoff bestehenden Innenrohr hervorzuheben ist. Hier ist es dann besonders günstig, wenn beide Bestandteile dieser Verbindung, nämlich das abstandhaltende Band und das Innenrohr, aus ein und demselben polymerem Werkstoff gefertigt sind. Selbstverständlich können auch andere Werkstoffe auf diese Weise miteinander in Verbindung gebracht werden, wobei dann lediglich die entsprechenden Kleber zu verwenden sind, die diese unterschiedlichen Materialien aufeinander festzulegen in der Lage sind. Die radiale Befestigung der abstandhaltenden Bänder kann auch durch mechanische Spannelemente erfolgen, wobei beispielsweise Drähte oder Bänder aus verschiedenen Materialien verwendet werden können. Diese mechanischen Spannelemente können in den Freiraum des abstandhaltenden Bandes eingebracht werden, der zwischen zwei Reihen der noppenartigen Erhöhungen verläuft.

Beide Verbindungsarten können kombiniert werden, sodaß zusätzlich zu der zunächst hergestellen Klebeverbindung zwischen abstandhaltendem Band und äußerer Oberfläche des Innenrohres noch eine Verspannung durch ein mechanisches Spannelement in der oben beschriebenen Art treten kann. Die Verbindung ist dann besonders fest und gegen ein Verschieben bzw. Abreißen optimal gesichert.

Neben der radialen Anordnung des abstandhaltenden Bandes auf der äußeren Umfangsfläche des Innenrohres besteht die Möglichkeit, das abstandhaltende Band axial, d.h. längsverlaufend auf der äußeren Umfangsfläche des Innenrohres anzuordnen. Auch hierbei können mehrere dieser abstandhaltenden Bänder untereinander in definiertem Abstand auf dem äußeren Umfang des Innenrohres festgelegt werden. Die Festlegung kann dabei in der oben beschriebenen Weise erfolgen. Gegenüber der radialen Anordnung der abstandhaltenden Bänder kann die axiale Anordnung dann von Vorteil sein, wenn größere Rohrlängen zur Bildung des neuerungsgemäßen Koaxialrohres zusammengeschoben werden sollen. Dieser Vorteil wird in der einheitlichen Führung des Außenrohres auf den noppenartigen Erhöhungen am äußeren Umfang des Innenrohres gesehen.

Das Zusammenschieben beider Rohre erfolgt in der Weise, daß das Außenrohr bei radialer Anordnung der abstandhaltenden Bänder auf der äußeren Umfangsfläche des Innenrohres abschnittsweise von Band zu Band über das Innenrohr geschoben wird. Hierbei ist vor dem Überschieben der ersten beiden Bandabschnitte ein Verkanten des Außenrohres auszuschließen, damit eine Beschädigung der nachfolgenden abstandhaltenden Bänder durch den Schiebedruck des Außenrohres vermieden wird. Nach Überschieben der ersten beiden abstandhaltenden Bänder gleitet das Außenrohr nur noch auf den noppenartigen Erhöhungen und kann bis zu seinem Endsitz leicht auf das Innenrohr aufgeschoben werden. Hierbei ist es vorteilhaft, daß die noppenartigen Erhöhungen ein geringes Spiel des Außenrohres auf dem Innenrohr zulassen, damit die Verschiebung bis in Endsitz des Außenrohres erleichtert wird.

Bei axial verlaufenden abstandhaltenden Bändern auf der äußeren Umfangsfläche des Innenrohres erfolgt das Gleiten des Außenrohres auf dem Innenrohr bereits ab dem Überschieben der ersten noppenartigen Erhöhung. Der Verschiebevorgang erfolgt dann in gleicher Weise wie oben beschrieben.

In der Zeichnung sind Ausführungsbeispiele der neuerungsgemäßen Rohrkombination schematisch dargestellt ; es zeigt :

Fig. 1 eine Draufsicht auf einen Bandabschnitt mit versetzt angeordneten Erhöhungen.

Fig. 2 einen Querschnitt durch ein Koaxialrohr gemäß der Neuerung.

Fig. 3 eine isometrische Darstellung eines Innenrohres mit am äußeren Umfang radial angeordnetem Distanzband.

Fig. 4 eine isometrische Darstellung eines Innenrohres mit am äußeren Umfang axial angeordneten Distanzbändern.

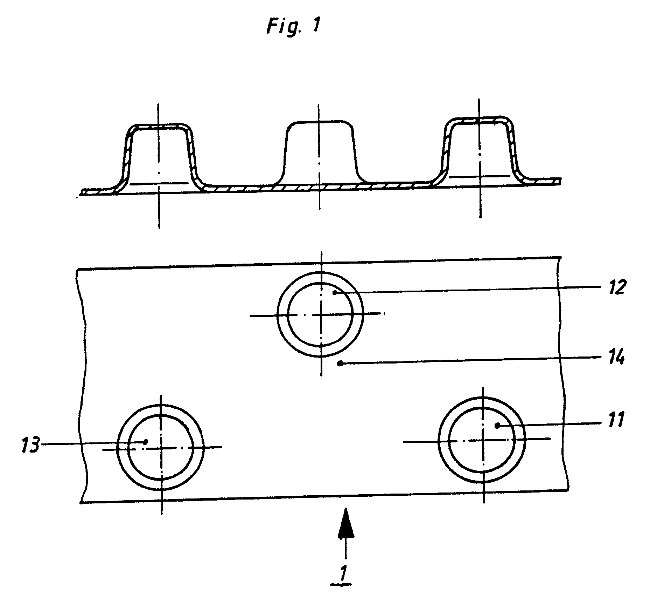

Fig. 1 zeigt die Draufsicht des Abschnittes eines Bandes 1 mit versetzt angeordneten noppenartigen Erhöhungen 11, 12, 13 die in der Darstellung als Kegelstümpfe gestaltet sind. Neben dieser Ausführungsart können die verschiedensten anderen Gestaltungmöglichkeiten wie würfelförmig, mehreckiger Pyramidenstumpf, rund, oval usw. verwendet werden.

Die noppenartigen Erhöhung 11, 12, 13 sind so gegeneinander versetzt, daß sie – wie im gezeigten Beispiel – im Abstand voneinander auf einer Achse liegen. Die noppenartige Erhöhung 12 ist in der Hälfte des Abstandes der noppenartigen Erhöhungen 11, 13 an den anderen Rand des Bandes 1 versetzt dargestellt. Zwischen der noppenartigen Erhöhung 12 und den noppenartigen Erhöhungen 11, 13 ist auf der Oberfläche des Bandes 1 ein Bereich 14, der längs über die Mitte des Bandes 1 verläuft und frei von noppenartigen Erhöhungen ist. Dieser längsverlaufende Bereich 14 ist für die Anordnung von in der Darstellung nicht gezeigten Spannmitteln vorgesehen. Diese mechanischen Spannmittel können wegen der besonderen Anordnung der noppenartigen Erhöhungen 11, 13 einerseits und 12 andererseits nach ihrer Einbringung nicht mehr von dem Band verrutschen.

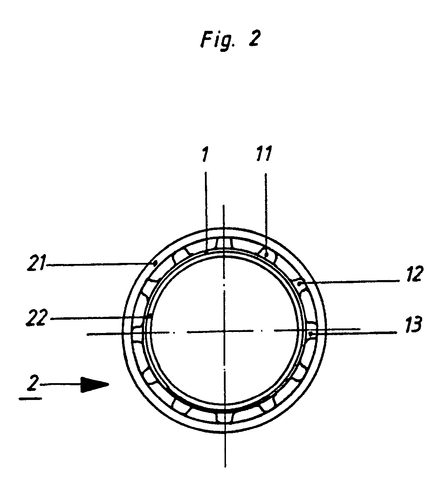

Der in Fig. 2 dargestellte Querschnitt durch das Koaxialrohr 2 zeigt das äußere Rohr 21 und das innere Rohr 22, wobei das innere Rohr 22 koaxial in dem äußeren Rohr 21 angeordnet ist. Beide Rohre 21, 22 werden in definiertem Abstand voneinander gehalten durch das Band 1 mit den rippenartigen Erhöhungen 11, 12, 13. Das Band 1 mit seinen rippenartigen Erhöhungen 11, 12, 13 ist radial auf dem äußeren Umfang des Innenrohres 22 angeordnet. Die rippenartigen Erhöhungen 11, 12, 13 entsprechend dabei annähernd dem umlaufenden lichten Innenraum zwischen dem Außenrohr 21 und dem Innenrohr 22.

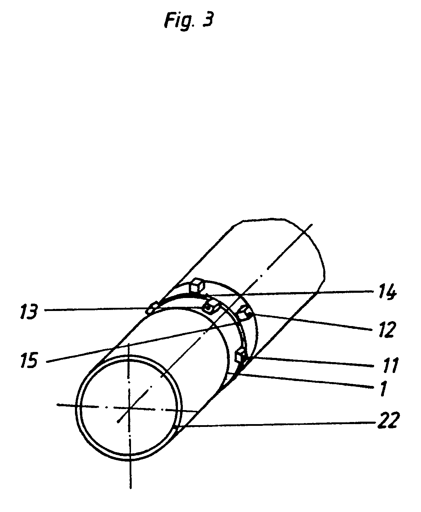

Fig. 3 zeigt in seiner isometrischen Darstellung eines Innenrohres 22 ein radial am äußeren Umfang angeordnetes Distanzband 1 mit den noppenartigen Erhöhungen 11, 12, 13. Zwischen den noppenartigen Erhöhungen 11, 12, 13 ist im Bereich 14 ein mechanisches Spannelement 15 angeordnet, welches im vorliegenden Fall beispielsweise ein Fixierband ist. Neben dieser mechanischen Festlegung des Bandes 1 am äußeren Umfang des Innenrohres 22 kann das Band 1 auch durch Kleben dort befestigt sein. Die Klebung kann zusätzlich zu der Festlegung durch das mechanische Spannelement 15 erfolgen, sie kann aber auch allein für die Festlegung des Bandes 1 am äußeren Umfang des Innenrohres 22 Sorge tragen.

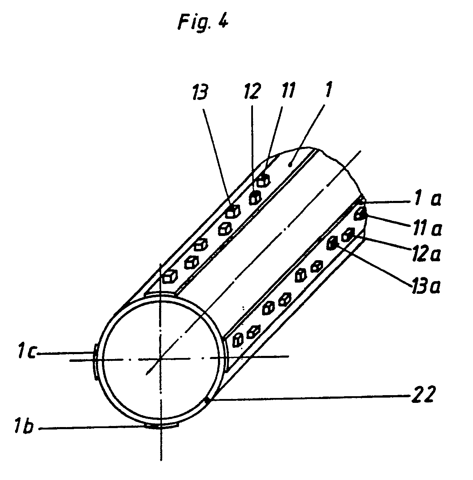

Fig. 4 zeigt eine entsprechende Darstellung gemäß Fig. 3 mit dem Unterschied, daß das Band 1 hier nicht radial, sondern axial auf dem äußeren Umfang des Innenrohres 22 angeordnet ist. In der gezeigten Darstellung sind 4 solcher Bänder 1, 1a, 1b, 1c in Viertelteilung auf dem äußeren Umfang des Innenrohres 22 angeordnet. Auf den Oberflächen der Bänder 1, 1a sind die versetzt zueinander angeordneten noppenartigen Erhöhungen 11, 12, 13 bzw. 11a, 12a, 13a zu erkennen.

## Ansprüche

1. Koaxialrohr mit einem definierten Abstand des Außenumfangs Innenrohr zum Innenumfang Außenrohr, wobei dieser Abstand durch im lichten Raum zwischen Innenrohr und Außenrohr angeordnete Abstandsbänder mit noppenartigen Erhöhungen geschaffen ist, dadurch gekennzeichnet, daß das einzelne Abstandsband (1) aus polymerem Werkstoff radial oder axial verlaufend auf der äußeren Umfangsfläche des Innenrohres (22) festgelegt ist, und daß die noppenartigen Erhöhungen (11, 12, 13) einseitig und abschnittsweise versetzt zueinander in wenigstens zwei Reihen auf der Oberfläche des Abstandsbandes (1) angeordnet sind.

2. Koaxialrohr nach Anspruch 1, dadurch gekennzeichnet, daß zwischen zwei Reihen der noppenartigen Erhöhungen (11, 12, 13) ein längs des Abstandsbandes (1) verlaufender Freiraum (14) ohne Erhöhungen verbleibt.

3. Koaxialrohr nach Anspruch 1, dadurch gekennzeichnet, daß das Abstandsband (1) mit den nach außen ragenden noppenartigen Erhöhungen (11, 12, 13) durch Kleben auf der äußeren Umfangsfläche des Innenrohres (22) festlegbar ist.

4. Koaxialrohr nach Ansprüchen 1 und 2, dadurch gekennzeichnet, daß das Abstandsband (1) durch ein mechanisches Spannelement (15), welches in den Freiraum (14) zwischen zwei Reihen der noppenartigen Erhöhungen (11, 12, 13) eingebracht ist, auf der äußeren Umfangsfläche des Innenrohres (22) festlegbar ist.

5. Koaxialrohr nach Ansprüchen 3 und 4, gekennzeichnet durch die Kombination beider Festlegearten.

6. Koaxialrohr nach einem oder mehreren der vorangegangenen Ansprüche, dadurch gekennzeichnet, daß mehrere Abstandsbänder (1, 1a, 1b, 1c) in definiertem Abstand auf der äußeren Umfangsfläche des Innenrohres (22) vorgesehen sind.

7. Koaxialrohr nach einem oder mehreren der vorangegangenen Ansprüche, dadurch gekennzeichnet, daß die Abstandsbänder (1, 1a, 1b, 1c) radial oder axial verlaufend auf die äußere Umfangsfläche des Innenrohres (22) aufgebracht sind.

## Claims

1. Coaxial tubing exhibiting a defined distance between the external circumference of inner tubing and internal circumference of outer tube whereby this distance is governed by spacer tapes featuring stud-type elevations arranged in the clear space between inner tube and outer tube, characterised by the fact that individual polymer spacer tapes (1), is fastened to the outer circumferential surface of the inner tubing, either radially or axially, and that stud-type elevations (11, 12, 13) are arranged sectionally on one side and offset in at least two rows on the surface of the spacer tape (1).

2. Coaxial tubing as described in claim 1, characterised by the fact that an open space (14) without elevations running along the spacer tape (1) is present between two rows of stud-type elevations (11, 12, 13).

3. Coaxial tubing as described in claim 1, characterised by the fact that the spacer tape (1) can be fastened with the outwardly projecting stud-type elevations (11, 12, 13) to the outer circumferential surface of the inner tubing (22) by means of bonding.

4. Coaxial tubing as described in claims 1 and 2, characterised by the fact that spacer tape (1) can be fixed to the outer circumferential surface of the inner tubing (22) by a mechanical clamping element (15) located in the open space (14) between two rows of stud-type elevations (11, 12, 13).

5. Coaxial tubing as described in claims 3 and 4, characterised by the combination of both fixture methods.

6. Coaxial tubing as described in one or more of the aforementioned claims, characterised by the fact that several spacer tapes (1, 1a, 1b, 1c) are provided at defined intervals on the outer circumferential surface of the inner tubing (22).

7. Coaxial tubing as described in one or more of the aforementioned claims, characterised by the fact that spacer tapes (1, 1a, 1b, 1c,) are arranged radially or axially on the outer circumferential surface of the inner tubing (22).

## Revendications

1. Tube coaxial avec une distance définie de la périphérie extérieure du tube intérieur à la périphérie intérieure du tube extérieur, cette distance étant réalisée par des bandes d'écartement (en matériau polymère) munies d'ergots en forme de nopes installées dans l'espace compris entre le tube intérieur et le tube extérieur, caractérisé par le fait que chaque bande d'écartement (1) est fixée radialement ou axialement sur la surface périphérique extérieure du tube intérieur (22) et que les ergots en forme de nopes (11, 12, 13) sont installés unilatéralement et en quinconce par secteurs sur au moins deux rangées à la surface de la bande d'écartement (1).

2. Tube coaxial selon la revendication 1, caractérisé par le fait qu'entre deux rangées d'ergots en forme de nopes (11, 12, 13) il reste un espace libre (14) sans ergots le long de la bande d'écartement (1).

3. Tube coaxial selon la revendication 1, caractérisé par le fait que la bande d'écartement (1) avec les ergots en forme de nopes (11, 12, 13) en saillie vers l'extérieur peut être fixée par collage sur la surface périphérique extérieure du tube intérieur (22).

4. Tube coaxial selon les revendications 1 et 2, caractérisé par le fait que la bande d'écartement (1) peut être fixée sur la surface périphérique extérieure du tube intérieur (22) par un élément de serrage (15) mécanique qui est mis en place dans l'espace libre (14) entre deux rangées d'ergots en forme de nopes (11, 12, 13).

5. Tube coaxial selon les revendications 3 et 4, caractérisé par la combinaison des deux genres de fixation.

6. Tube coaxial selon une ou plusieurs revendications mentionnées ci-dessus, caractérisé par le fait que plusieurs bandes d'écartement (1, 1a, 1b, 1c) à intervalles définis sont prévues sur la surface périphérique extérieure du tube intérieur (22).

7. Tube coaxial selon une ou plusieurs revendications mentionnées ci-dessus, caractérisé par le fait que les bandes d'écartement (1, 1a, 1b, 1c) sont mises en place en position radiale ou axiale sur la surface périphérique extérieure du tube intérieur (22).

*Fig. 1*

Fig. 2

*Fig. 3*

13

15

14

12

11

1

22

**Fig. 4**